# EUROPÄISCHE PATENTANMELDUNG

(11) **EP 1 527 952 A2**
(43) Veröffentlichungstag der Anmeldung: **04.05.2005**
(21) Anmeldenummer: 04025872.5
(22) Anmeldetag: 01.11.2004
(51) Int. Cl.: B60Q 7/00

(54) **Warnvorrichtung für Kraftfahrzeuge**

(30) Priorität: 31.10.2003 DE 20316898 U
(71) Anmelder: Zuber Gerd, 63936 Schneeberg (DE)
(72) Erfinder: Zuber Gerd, 63936 Schneeberg (DE)
(74) Vertreter: Thürer, Andreas

(57) **Zusammenfassung**

Um eine mechanische Warnscheibe (1), die innen in einem Kraftfahrzeug für entgegenkommenden Verkehr sichtbar anzuordnen ist, so dass entgegenkommende Fahrzeuge zu warnen sind, so auszubilden, dass sie schnell, leicht und sicher zu bedienen ist, wird vorgeschlagen, dass die Warnscheibe (1) mehrere zueinander mechanisch verlegbare, mechanische Anzeigeelemente (2) aufweist und die Warnscheibe (1) durch mechanische Verlegung eines Anzeigeelementes (2) zwischen einem warnaktiven und einem warninaktiven Zustand umzuschalten ist, wobei die Anzeigeelemente zumindest eine Abdeckplatte (3) und zumindest einen relativ dazu verschiebbaren Signalträger (4) aufweisen, die zusammen in einem warnaktiven Zustand zumindest ein Warnsignal (5) bilden, wobei Abdeckbereiche (6) der Abdeckplatte (3) in einer warninaktiven Schiebestellung (8) Signalbereiche (7) des Signalträgers (4) im wesentlichen bedecken und verstecken und in einer warnaktiven Schiebestellung (9) im wesentlichen freigeben und sichtbar machen.

## Beschreibung

Die Erfindung betrifft eine mechanische Warnscheibe, die innen in einem Kraftfahrzeug für entgegenkommenden Verkehr sichtbar anzuordnen ist, so dass entgegenkommende Fahrzeuge zu warnen sind.

Die G 86 23 667.9 offenbart ein Warnschild. Das Warnschild wird im zwischen Windschutzscheibe und Vordersitzen gelegenen Fahrzeug-Vorderraum angebracht und ist hinter der Windschutzscheibe nach vorn weisend sichtbar zu machen. Vorgeschlagen wird insbesondere eine Anlenkung des Schildes in der Nähe der Ober- oder Unterkante der Windschutzscheibe in Form einer hoch- oder herunterschwenkbaren Klapptafel.

Nachteilig ist, das die Warnung des Verkehrs durch Anbringung und Aufbau des Warnschilds nur unter erhöhtem Aufwand zu erreichen ist, wobei durch Ablenkung vom Verkehrsgeschehen die Unfallgefahr erhöht wird.

Die vorliegende Erfindung hat die Aufgabe, unter Vermeidung der Nachteile des Stands der Technik eine Warnscheibe zu liefern, die schnell, leicht und sicher zu bedienen ist.

Die Aufgabe wird gelöst durch eine mechanische Warnscheibe, die innen in einem Kraftfahrzeug für entgegenkommenden Verkehr sichtbar anzuordnen ist, so dass entgegenkommende Fahrzeuge zu warnen sind, wobei die Warnscheibe mehrere zueinander mechanisch verlegbare, mechanische Anzeigeelemente aufweist und die Warnscheibe durch mechanische Verlegung eines Anzeigeelementes zwischen einem warnaktiven und einem warninaktiven Zustand umzuschalten ist, wobei die Anzeigeelemente zumindest eine Abdeckplatte und zumindest einen relativ dazu verschiebbaren Signalträger aufweisen, die zusammen in einem warnaktiven, vorzugsweise einrastbaren Zustand zumindest ein Warnsignal bilden, wobei Abdeckbereiche der Abdeckplatte in einer warninaktiven Schiebestellung Signalbereiche des Signalträgers im wesentlichen bedecken und verstecken und in einer warnaktiven Schiebestellung im wesentlichen freigeben und sichtbar machen.

Die Warnscheibe besteht im wesentlichen aus mechanisch gegeneinander verlegbaren Anzeigeelementen. Die Anzeigeelemente, die vorzugsweise in Form von mehreren Schichten übereinander liegen, werden gegeneinander verschoben. Hierdurch ist der Aufbau der Warnscheibe besonders einfach, aus wenigen, preisgünstigen Elementen in wenigen Arbeitsschritten herzustellen und wenig störanfällig. Die Verschiebung der Anzeigeelemente gegeneinander ist mit einer Hand möglich, ohne dass der Autofahrer seine volle Aufmerksamkeit auf die Warnscheibe richten muss. Die Verschiebung kann auch direkt nach Eintritt der gefährlichen Situation während des Fahrens schnell vorgenommen werden. Eine sehr einfach aufgebaute Vorrichtung liegt vor, wenn zwei relativ zueinander mechanisch verlegbare Anzeigeelemente vorgesehen sind. Die Herstellungskosten sind minimiert. Die Dicke des Materials der Anzeigeelemente kann beispielsweise an die vorgesehene Befestigungsart angepasst sein. Auf diese Weise liegen im wesentlichen zwei Schiebestellungen vor, die vorzugsweise einrastbar sind und eindeutig zu erreichen sind und kein sorgfältiges Nachjustieren oder ein aufwendiges Befestigen nach der Einstellung erfordern.

Eine einfache und kostengünstige Herstellung einer Warnscheibe ist möglich, wenn die Abdeckplatte entlang einer vorgesehenen Verschieberichtung gesehen zumindest ein Fenster und zumindest einen dem Fenster benachbarten Abdeckbereich aufweist, wobei das zumindest eine Fenster und der zumindest eine Abdeckbereich im wesentlichen mit der Geometrie des zumindest einen Warnsignals im Sinne der Bedeckung und der Freigabe korrespondieren. Es liegt ein besonders einfacher Aufbau einer Warnscheibe vor mit den Fenstern, die beispielsweise mit einem durchsichtigen Material bedeckt sein können oder auch lediglich ausgestanzt oder auf sonstige Weise freigelegt.

Vorteilhaft ist es, wenn mehrere entlang der Verschieberichtung jeweils mit einem Signalabstand benachbarte Warnsignale vorgesehen sind, wobei die Breite der Fenster im wesentlichen der Breite der Warnsignale entspricht, und die Breite der Abdeckbereiche zwischen den Fenstern im wesentlichen kleiner oder gleich dem Signalabstand ist. Die Warnsignale werden aktiv, wenn sie sich in einer Position hinter einem der Fenster befinden. Bei einer mehrfachen Anordnung von Warnsignalen nebeneinander sind diese in einer mit den Abdeckbereichen korrespondierenden Anordnung vorgesehen, so dass bei einem Verschiebevorgang ein Verschieben um eine Fensterbreite oder eine Breite eines abgedeckten Bereichs ausreicht, die Signale zu aktivieren. Der gesamte Verschiebehub ist also sehr gering.

Die Warnscheibe weist eine geringe, an die Anforderungen angepasste Ausdehnung auf, wenn die Breite der Warnsignale und/oder der Signalabstand und/oder die Breite der Fenster und/oder die Breite der Abdeckbereiche, jeweils entlang der Verschieberichtung gesehen, im wesentlichen gleich sind.

Eine sichere Endpositionierung sowie Umstellbarkeit der Zustände ist gegeben, wenn eine Abdeckplatte mit Fenstern und ein relativ dazu verlegbarer Signalträger vorgesehen sind, wobei der Signalträger aufrollbar und abrollbar ausgebildet ist, wobei durch das Aufrollmaß oder Abrollmaß im Zusammenwirken mit den Maßen der Warnsignale und den Maßen der Fenster sowie der Fensterabstände zwischen warnaktivem und warninaktivem Zustand umzuschalten ist.

Vorteilhaft ist es, wenn zwei beabstandete und miteinander zusammenwirkende Rollen vorgesehen sind, wobei durch das gleichzeitige Aufrollen auf eine und Abrollen von der anderen Rolle die mechanische Verlegung erreicht wird. Hierdurch ist die Position des Signalträgers gut fixierbar und leicht wiederherstellbar. Hierbei kann der Signalträger sehr dünn vorgesehen sein, da auf eine Eigensteifigkeit weitestgehend verzichtet werden kann. Zudem besteht die Möglichkeit, die Vorrichtung auf einfache Weise elektrisch anzusteuern.

Auf ein Zurückstellen des Signals kann verzichtet werden, wenn ein zwischen zwei beabstandet zueinander angeordnete Rollen umlaufendes Signalband mit Warnsignalen vorgesehen ist. Der aktive und inaktive Zustand kann somit lediglich durch ein Weiterrollen in dieselbe Richtung erzeugt werden.

Vorteilhaft ist es, wenn auf dem im warnaktiven Zustand durch die Fenster der Abdeckplatte sichtbaren Signalträger zumindest ein Zeichen und/oder Symbol und/oder ein Farbelement mit einer in einem Abstand in mehrfacher Fahrzeuglänge erkennbaren Größe angebracht ist/sind, das/die vorzugsweise ein stark reflektierendes Material aufweis(t/en). Durch die Zeichen oder Symbole kann neben der Lenkung der Aufmerksamkeit auf die Warnscheibe noch zusätzliche Information vermittelt werden. Die Aufmerksamkeit des Gegenverkehrs kann durch eine mehrfache Nebeneinanderordnung von gleichen oder ähnlichen Zeichen noch erhöht werden.

Ein auffälliges Signal wird gegeben, wenn die Fenster der Abdeckplatte in Form zumindest eines Zeichens und/oder Symbols ausgebildet sind und der Signalträger eine mit den Fenstern im warnaktiven Zustand korrespondierende Farb- und/oder Reflektorfläche, vorzugsweise aus reflektierendem Orange oder Rot, aufweist. Die Herstellung ist dabei besonders flexibel, da die Art des Signals durch die entsprechend ausgearbeiteten Umrisse der Fenster der Abdeckplatte bestimmt werden. Auf dem Signalträger müssen also im wesentlichen farbige Bereiche ohne vorher bestimmte Form vorgesehen sein.

Eine variable Gestaltung des Warninhalts der Warnscheibe ist möglich. Insbesondere ist es vorteilhaft, wenn die Zeichen und/oder Symbole Ausrufungszeichen, und/oder das Wort "STOP" und/oder "HALT" und/oder "ACHTUNG" und/oder "VORSICHT" und/oder Wörter ähnlicher Bedeutung sind, die nach Maßgabe der vorhergehenden Ansprüche angeordnet sind. Dabei wird vorzugsweise je ein Buchstabe oder Symbol einem Fenster zugeordnet.

Vorteilhaft ist die Warnscheibe mit einer Rückfläche an einer Rückseite einer Blendschutzklappe des Kraftfahrzeugs befestigt. Im warninaktiven Zustand kann die Warnscheibe mitsamt der Blendschutzklappe weggeklappt werden. Hierbei ist es lediglich notwendig, den üblichen Handgriff zur Verstauung der Blendschutzklappe vorzunehmen. Falls eine sehr schnelle Entwarnung notwendig ist, kann sogar die aktivierte Warnscheibe mitsamt der Blendschutzklappe weggeklappt werden, ohne eine Störung des Fahrers, da der Signalträger aufgrund der platzsparenden Anordnung der Fenster sowie der verdeckten Bereiche lediglich einen sehr geringen Hub an der Auszugsseite der Warnscheibe aufweist.

Die Warnscheibe ist leicht wieder zu entfernen, wenn die Warnscheibe hinter eine an der Rückseite der Blendschutzklappe vorgesehene Lasche einsetzbar ist. Dabei wird Warnscheibe hinter der Lasche vorzugsweise so angeordnet, dass die Lasche kein warnaktives Signal abdeckt.

An das Material und die Form der Blendschutzklappe angepasste Befestigungsmöglichkeiten der Warnscheibe sind möglich, insbesondere vorteilhaft ist es, wenn die Warnscheibe mittels Druckknöpfen und/oder Haftstreifen und/oder Klammern an der Blendschutzvorrichtung anzubringen ist.

Eine Anbringung an der Vorderseite der Warnschutzscheibe insbesondere im unteren Bereich der Windschutzscheibe ist vorteilhaft vorzunehmen und auch leicht wieder zu entfernen, wenn die Warnscheibe mit Saugknöpfen an die Windschutzscheibe zu setzen ist.

Die Aufgabe wird zudem gelöst durch eine Warnvorrichtung, die innen in einem Kraftfahrzeug für entgegenkommenden Verkehr sichtbar anzuordnen ist, so dass entgegenkommende Fahrzeuge zu warnen sind, insbesondere zusätzlich zu einer Warnscheibe nach einem der Ansprüche 1 bis 14, wobei eine elektrische Signalvorrichtung in die Rückseite der Blendschutzklappe eingebaut und mit einem Schalter einund auszuschalten ist. Dabei ist ein Einbau der Warnvorrichtung im Kraftfahrzeugwerk möglich.

Vorteilhaft ist es, wenn die Blendschutzklappe eine Stromversorgung für eine Lichtquelle aufweist, die gleichzeitig die elektrische Signalvorrichtung mit Strom versorgt. Hierdurch wird Platz in dem räumlich eng begrenzten Raum der Blendschutzklappe gespart. Es sind keine zusätzlichen Installationen notwendig.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine Warnscheibe in warnaktivem Zustand und
- Fig. 2: eine Warnscheibe in warninaktivem Zustand.

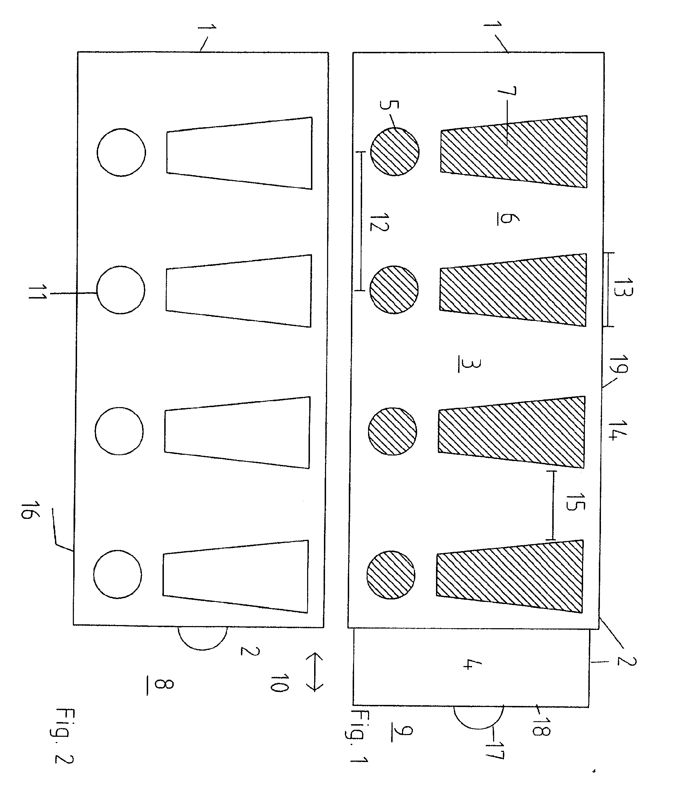

Fig.1 zeigt eine Vorderseite einer rechteckigen Warnscheibe 1. Die Warnscheibe ist aus zwei übereinanderliegenden Anzeigeelementen 2 aufgebaut. Das obere Anzeigeelement ist eine Abdeckplatte 3. Die Abdeckplatte 3 weist längs des rechteckförmigen Grundrisses Fenster 11 in Form von Ausrufungszeichen mit einer Breite 13 der Fenster 11 auf. Zwischen den Fenstern 11 befinden sich Abdeckbereich 6. Diese decken die entsprechenden Bereiche des darunterliegenden, an der Schmalseite 18 des rechteckförmigen Grundrisses in Verschieberichtung 10 in eine aus Abdeckplatte 3 und Rückseite 16 gebildete Tasche eingeschobenen Signalträgers 4 ab. Die Abdeckplatte 3 und die Rückseite 18 sind dabei an den Längsseiten 19 aneinander befestigt. Der Signalträger 4 weist vorzugsweise farbig gekennzeichnete, reflektierende Signalbereiche 7 sowie dazwischenliegende farblich neutrale Bereiche auf, die vorzugsweise dieselbe Farbe haben, wie die Abdeckplatte 3, die wiederum vorzugsweise an die Farbe der Blendschutzklappe angepasst ist.

In dem warnaktiven Zustand der Warnscheibe 1 befindet sich der Signalträger 4 mit seinen farbigen Bereichen in einer derartigen Schiebestellung, dass die farbigen Bereiche mit den Fenstern 11 der Abdeckplatte 3 korrespondieren.

Fig. 2 zeigt die Warnscheibe 1 in der eingeschobenen, warninaktiven Schiebestellung. Die neutralen Bereiche liegen korrespondierend zu den Fenstern 11 der Abdeckplatte 3, so dass der Eindruck einer gleichmäßigen, vorzugsweise gleichfarbigen Fläche erzeugt wird.

Zum einfacheren Verstellen weist der Signalträger 4 eine Lasche 17 auf, die an der Schmalseite 18 des Signalträgers 4 angeformt ist. Die Endstellung, die durch einfaches Ausziehen des Signalträgers 4 aus der Tasche möglich ist, ist vorzugsweise mit einem Anschlag ausgebildet, der verhindert, dass der Signalträger 4 aus Versehen zu weit ausgezogen wird und somit entweder die optimale warnaktive Schiebestellung versäumt wird oder sogar ein Verlust des Signalträgers 4 eintritt.

In einer weiteren, nicht dargestellten, bevorzugten Ausführungsform sind die Signale in Form von Ausrufungszeichen direkt auf dem Signalträger 4 aufgebracht und die Fenster sind rechteckförmig mit einer an die Ausrufungszeichen auf dem Signalträger angepassten Breite und Höhe.

Die Anzeigeelemente bestehen bevorzugt aus beschichteter Pappe oder stabilem Kunststoff, wobei die Farbe der farbigen Bereiche des Signalträgers vorzugsweise reflektierendes Orange oder Rot ist und die Farbe der Abdeckplatte an die Farbe der Rückseite der Blendschutzklappe des Kraftfahrzeugs angepasst ist.

### BEZUGSZEICHENLISTE

- 1: Warnscheibe
- 2: Anzeigeelemente
- 3: Abdeckplatte
- 4: Signalträger
- 5: Warnsignal
- 6: Abdeckbereiche
- 7: Signalbereiche
- 8: warninaktiven Schiebestellung
- 9: warnaktiven Schiebestellung
- 10: Verschieberichtung
- 11: Fenster
- 12: Signalabstand
- 13: Breite der Fenster
- 14: Breite der Warnsignale
- 15: Breite der Abdeckbereiche
- 16: Rückseite
- 17: Lasche
- 18: Schmalseite
- 19: Längsseiten

## Patentansprüche

1. Mechanische Warnscheibe (1), die innen in einem Kraftfahrzeug für entgegenkommenden Verkehr sichtbar anzuordnen ist, so dass entgegenkommende Fahrzeuge zu warnen sind, **dadurch gekennzeichnet, dass** die Warnscheibe (1) mehrere zueinander mechanisch verlegbare, mechanische Anzeigeelemente (2) aufweist und die Warnscheibe (1) durch mechanische Verlegung eines Anzeigeelementes (2) zwischen einem warnaktiven und einem warninaktiven Zustand umzuschalten ist, wobei die Anzeigeelemente zumindest eine Abdeckplatte (3) und zumindest einen relativ dazu verschiebbaren Signalträger (4) aufweisen, die zusammen in einem warnaktiven Zustand zumindest ein Warnsignal (5) bilden, wobei Abdeckbereiche (6) der Abdeckplatte (3) in einer warninaktiven Schiebestellung (8) Signalbereiche (7) des Signalträgers (4) im wesentlichen bedecken und verstecken und in einer warnaktiven Schiebestellung (9) im wesentlichen freigeben und sichtbar machen.

2. Mechanische Warnscheibe nach Anspruch 1, **dadurch gekennzeichnet, dass** die Abdeckplatte (3) entlang einer vorgesehenen Verschieberichtung (10) gesehen zumindest ein Fenster (11) und zumindest einen dem Fenster benachbarten Abdeckbereich (6) aufweist, wobei das zumindest eine Fenster (11) und der zumindest eine Abdeckbereich (6) im wesentlichen mit der Geometrie des zumindest einen Warnsignals (5) im Sinne der Bedeckung und der Freigabe korrespondieren.

3. Mechanische Warnscheibe nach Anspruch 2, **dadurch gekennzeichnet, dass** mehrere entlang der Verschieberichtung (10) jeweils mit einem Signalabstand (12) benachbarte Warnsignal (5) vorgesehen sind, wobei die Breite (13) der Fenster (11) im wesentlichen der Breite (14) der Warnsignale (5) entspricht, und die Breite (15) der Abdeckbereiche (6) zwischen den Fenstern (11) im wesentlichen kleiner oder gleich dem Signalabstand (12) ist.

4. Mechanische Warnscheibe nach Anspruch 3, **dadurch gekennzeichnet, dass** die Breite (14) der Warnsignale (5) und/oder der Signalabstand (12) und/oder die Breite (13) der Fenster (11) und/oder die Breite (15) der Abdeckbereiche (6), jeweils entlang der Verschieberichtung (10) gesehen, im wesentlichen gleich sind.

5. Mechanische Warnscheibe nach Anspruch 1, **dadurch gekennzeichnet, dass** eine Abdeckplatte (3) mit Fenstern (11) und ein relativ dazu verlegbarer Signalträger (4) vorgesehen sind, wobei der Signalträger (4) aufrollbar und abrollbar ausgebildet ist, wobei durch das Aufrollmaß oder Abrollmaß im Zusammenwirken mit den Maßen der Warnsignale und den Maßen der Fenster sowie der Fensterabstände zwischen warnaktivem und warninaktivem Zustand umzuschalten ist.

6. Mechanische Warnscheibe nach Anspruch 5, **dadurch gekennzeichnet, dass** zwei beabstandete und miteinander zusammenwirkende Rollen vorgesehen sind, wobei durch das gleichzeitige Aufrollen auf eine und Abrollen von der anderen Rolle die mechanische Verlegung erreicht wird.

7. Mechanische Warnscheibe nach Anspruch 1, **dadurch gekennzeichnet, dass** ein zwischen zwei beabstandet zueinander angeordneten Rollen umlaufendes Signalband mit Warnsignalen (5) vorgesehen ist

8. Mechanische Warnscheibe nach einem der Ansprüche 1 bis 7, **dadurch gekennzeichnet, dass** auf dem im warnaktiven Zustand durch die Fenster der Abdeckplatte (3) sichtbaren Signalträger (4) zumindest ein Zeichen und/oder Symbol und/oder ein Farbelement mit einer in einem Abstand in mehrfacher Fahrzeuglänge erkennbaren Größe angebracht ist/sind, das/die vorzugsweise ein stark reflektierendes Material aufweis(t/en).

9. Mechanische Warnscheibe nach einem der Ansprüche 1 bis 8, **dadurch gekennzeichnet, dass** die Fenster (11) der Abdeckplatte (3) in Form zumindest eines Zeichens und/oder Symbols ausgebildet sind und der Signalträger (4) eine mit den Fenstern (11) im warnaktiven Zustand korrespondierende Farbund/oder Reflektorfläche, vorzugsweise aus reflektierendem Orange oder Rot, aufweist.

10. Mechanische Warnscheibe nach einem der Ansprüche 1 bis 9, **dadurch gekennzeichnet, dass** die Zeichen und/oder Symbole Ausrufungszeichen, und/oder das Wort "STOP" und/oder "HALT" und/oder "ACHTUNG" und/oder "VORSICHT" und/oder Wörter ähnlicher Bedeutung sind, die nach Maßgabe der vorhergehenden Ansprüche angeordnet sind.

11. Mechanische Warnscheibe nach einem der Ansprüche 1 bis 10, **dadurch gekennzeichnet, dass** die Warnscheibe (1) mit einer Rückfläche (16) an einer Rückseite einer Blendschutzklappe des Kraftfahrzeugs befestigt ist.

12. Mechanische Warnscheibe nach einem der Ansprüche 1 bis 11, **dadurch gekennzeichnet, dass** die Warnscheibe (1) hinter eine an der Rückseite der Blendschutzklappe vorgesehene Lasche einsetzbar ist.

13. Mechanische Warnscheibe nach einem der Ansprüche 1 bis 12, **dadurch gekennzeichnet, dass** die Warnscheibe (1) mittels Druckknöpfen und/oder Haftstreifen und/oder Klammern und/oder Klebstoff an der Blendschutzklappe anzubringen ist.

14. Mechanische Warnscheibe nach einem der Ansprüche 1 bis 13, **dadurch gekennzeichnet, dass** die Warnscheibe (1) mit Saugknöpfen an die Windschutzscheibe zu setzen ist.

15. Warnvorrichtung, die innen in einem Kraftfahrzeug für entgegenkommenden Verkehr sichtbar anzuordnen ist, so dass entgegenkommende Fahrzeuge zu warnen sind, insbesondere zusätzlich zu einer Warnscheibe nach einem der Ansprüche 1 bis 14, **dadurch gekennzeichnet, dass** eine elektrische Signalvorrichtung in die Rückseite der Blendschutzklappe eingebaut und mit einem Schalter ein- und auszuschalten ist.

16. Warnvorrichtung nach Anspruch 15, **dadurch gekennzeichnet, dass** die Blendschutzklappe eine Stromversorgung für eine Lichtquelle aufweist, die gleichzeitig die elektrische Signalvorrichtung mit Strom versorgt.
